(19)

Europäisches Patentamt

European Patent Office

Office européen des brevets

(11) **EP 3 309 540 A1**

(12) **EUROPEAN PATENT APPLICATION**

(43) Date of publication:
**18.04.2018 Bulletin 2018/16**

(51) Int Cl.:
*G01N 21/958* (2006.01)      *G01M 11/02* (2006.01)

(21) Application number: **17186240.2**

(22) Date of filing: **15.08.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **16.08.2016   JP 2016159540**

(71) Applicant: **Tomey Corporation**
**Nagoya-shi, Aichi 451-0051 (JP)**

(72) Inventors:
• **SENO, Takeshi**
  **Nagoya-shi, Aichi 451-0051 (JP)**

• **KATO, Chihiro**
  **Nagoya-shi, Aichi 451-0051 (JP)**
• **NAKATA, Yuichiro**
  **Nagoya-shi, Aichi 451-0051 (JP)**
• **AOKI, Nobuyori**
  **Nagoya-shi, Aichi 451-0051 (JP)**
• **BIAN, Guangchun**
  **Nagoya-shi, Aichi 451-0051 (JP)**
• **TSUKAMOTO, Makoto**
  **Nagoya-shi, Aichi 451-0051 (JP)**

(74) Representative: **Daub, Thomas**
**Patent- und Rechtsanwaltskanzlei Daub**
**Bahnhofstrasse 5**
**88662 Überlingen (DE)**

(54) **LENSMETER**

(57)      A lensmeter includes a light emission portion (11, 12, 13) configured to emit light so as to radiate the light onto a lens-to-be-inspected (18), and a light reception portion (26) configured to receive the light transmitted through the lens-to-be-inspected to measure an optical characteristic (refractive power) of the lens-to-be-inspected. The light emission portion includes a measurement light source (11) configured to emit green light or red light for measurement of refractive power of the lens-to-be-inspected, a first inspection light source (12) configured to emit ultraviolet light, and a second inspection light source (13) configured to emit blue light. The light reception portion (26) is configured to selectively receive lights from the measurement light source, the first inspection light source and the second inspection light source respectively.

FIG. 3

EP 3 309 540 A1

## Description

BACKGROUND

The present invention relates to a lensmeter which can measure, for example, an optical characteristic such as spherical lens power of a spectacle lens, a contact lens etc.

Spectacle lenses or contact lenses are mainly used for correcting refractive powers of patient's eyes. Some spectacle lenses or contact lenses providing various functions in order to attain comfortability or safety have been commercially available on the market. As one of such examples, there is a spectacle lens or a contact lens having an ultraviolet cut function for cutting ultraviolet light which is regarded as harmful to human eyes.

A lensmeter has been proposed in Patent Literature 1. An inspection optical system is arranged in the lensmeter. In the inspection optical system, inspection luminous flux including ultraviolet light is projected from an inspection light source, transmitted through a lens-to-be-inspected, and received by an inspection light reception element. In a region ranging from an installation place of the lens-to-be-inspected to the inspection light reception element, the inspection luminous flux having an optical axis parallel with measurement luminous flux is set on the measurement luminous flux. On the other hand, a measurement light reception element and the inspection light reception element are disposed in different positions on an optical path of the measurement luminous flux, and a long wavelength light cut filter for selectively transmitting ultraviolet light is provided. Thus, an optical characteristic and an ultraviolet light transmittance of the lens-to-be-inspected can be measured. That is, since the optical characteristic is measured and the ultraviolet light transmittance can be also measured, it is possible to determine whether the lens-to-be-inspected has an ultraviolet cut function or not.

[Patent Literature 1] JP 2007-205876 A

SUMMARY

One of objects of the invention is to provide a lensmeter which can measure an optical characteristic of a lens-to-be-inspected, and measure an ultraviolet light transmittance and a blue light transmittance of the lens-to-be-inspected so that it is possible determine whether the lens-to-be-inspected has a blue cut function or not in a simplified manner.

According to one advantageous aspect of the invention, there is provided a lensmeter including:

a light emission portion configured to emit light so as to radiate the light onto a lens-to-be-inspected; and
a light reception portion configured to receive the light transmitted through the lens-to-be-inspected to measure an optical characteristic of the lens-to-be-inspected,
wherein the light emission portion includes:

a measurement light source configured to emit green light or red light for measurement of refractive power of the lens-to-be-inspected;
a first inspection light source configured to emit ultraviolet light; and
a second inspection light source configured to emit blue light, and

wherein the light reception portion is configured to selectively receive lights from the measurement light source, the first inspection light source and the second inspection light source respectively.

The light reception portion may be an RGB type CCD image sensor or CMOS image sensor, and a light receiving surface of the light reception portion for receiving red light may have sensitivity in an ultraviolet light region.

The light emission portion may be configured to radiate the light from the first inspection light source and the light from the second inspection light source onto the lens-to-be-inspected along an optical axis parallel with measurement luminous flux of the light from the measurement light source, so that the refractive power of the lens-to-be-inspected is measured.

The light emission portion may include a first multiplexing unit which multiplexes at least one of the light from the first inspection light source and the light from the second inspection light source with the light from the measurement light source.

The light emission portion may include a second multiplexing unit which multiplexes the light from the first inspection light source with the light from the second inspection light source, and a third multiplexing unit which multiplexes the multiplexed light multiplexed by the second multiplexing unit with the light from the measurement light source.

The light reception portion may include an extraction unit configured to extract, from the light transmitted through the lens-to-be-inspected, the lights from the first inspection light source and the second inspection light source, with respect to the light from the measurement light source. The light reception portion may include a first light reception element configured to receive the light from the measurement light source and a second light reception element configured to receive the light from the first inspection light source and the light from the second inspection light source. The second light reception element may be disposed in a different position from the first light reception element.

BRIEF DESCRIPTION OF DRAWINGS

Fig. 1 is an example of a graph showing spectral characteristics (transmittances versus wavelengths) of a UV cut lens and a blue cut coating lens.

Fig. 2 is an example of a graph showing sensitivity characteristic versus wavelength of an RGB type CCD image sensor or CMOS image sensor.

Fig. 3 is a view explaining an optical system of a lensmeter according to a first embodiment of the invention.

Fig. 4 is a block diagram explaining an overall configuration of the lensmeter according to the first embodiment of the invention.

Fig. 5 is a chart explaining an operation flow of the lensmeter according to the first embodiment of the invention.

Figs. 6A and 6B are views explaining examples of a pattern plate used in the lensmeter according to the first embodiment of the invention.

Fig. 7A is a view explaining an optical system of a lensmeter according to a second embodiment of the invention, and Fig. 7B is a view explaining an optical system of a lensmeter according to a third embodiment of the invention.

Fig. 8A is a view explaining an optical system of a lensmeter according to a fourth embodiment of the invention, and Fig 8B is a view explaining an optical system of a lensmeter according to a fifth embodiment of the invention.

Figs. 9A and 9B are views explaining examples of a display screen displayed on the monitor of the lensmeter according to any of the embodiments of the invention.

DETAILED DESCRIPTION OF EXEMPLIFIED EMBODIMENTS

Recently, as digital devices become widespread, spectacle lenses subjected to blue cut coating to reduce burdens on eyes due to blue light mainly emitted from backlights of display portions of the digital devices are commercially available on the market and becoming popular.

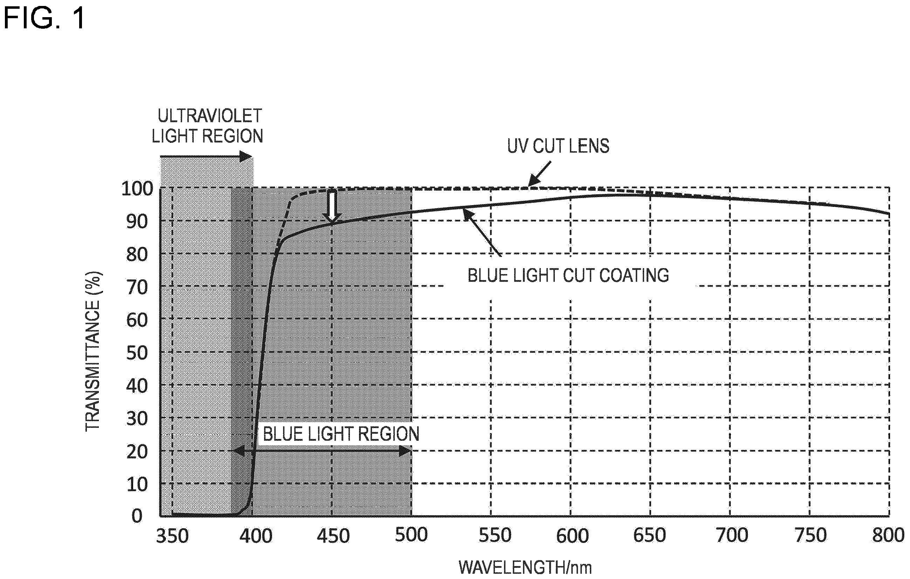

As shown in Fig. 1, a spectacle lens subjected to blue cut coating often reduces blue light and cuts an ultraviolet light region. Therefore, there is a problem that it may be unable to determine whether the lens-to-be-inspected is an ultraviolet cut lens or a blue cut coating lens, by the lensmeter disclosed in Patent Literature 1.

The invention has been accomplished in order to solve the foregoing problem. One of objects of the invention is to provide a lensmeter which can measure an optical characteristic of a lens-to-be-inspected, and measure an ultraviolet light transmittance and a blue light transmittance of the lens-to-be-inspected so that it is possible determine whether the lens-to-be-inspected has a blue cut function or not in a simplified manner.

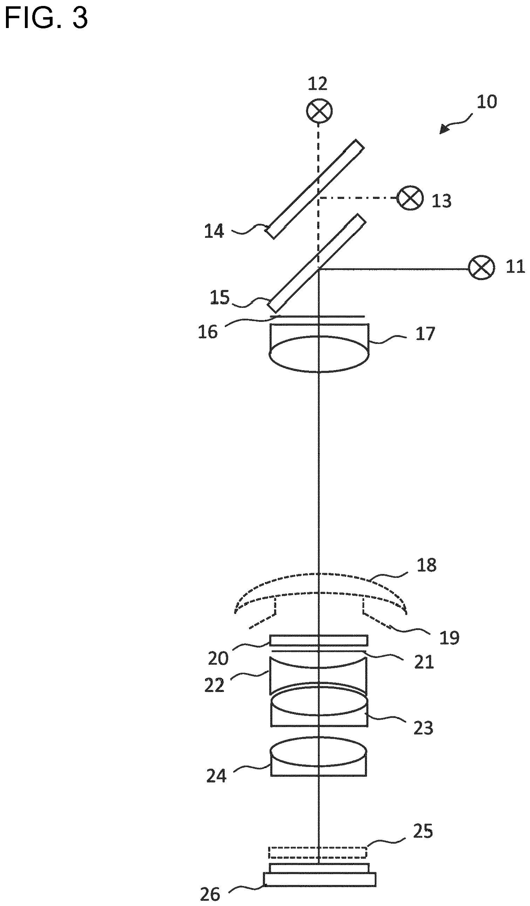

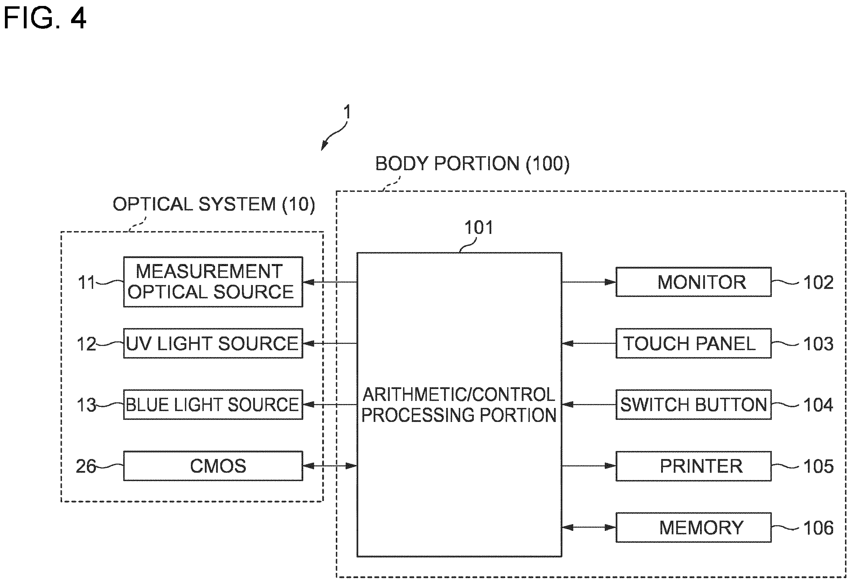

A lensmeter 1 according to a first embodiment of the invention will be described below with reference to Fig. 3 and Fig. 4. Fig. 3 is a view showing an optical system of the lensmeter 1 according to the first embodiment of the invention. Fig. 4 is a block diagram showing an overall configuration of the lensmeter 1 according to the first embodiment of the invention.

As shown in Fig. 4, the lensmeter 1 according to the first embodiment is constituted by the optical system 10 and a body portion 100. The optical system 10 is constituted by a measurement light source 11 for measurement of refractive power of a lens-to-be-inspected, a UV light source 12 for measurement of an ultraviolet light transmittance of the lens-to-be-inspected, a blue light source 13 for measurement of a blue light transmittance of the lens-to-be-inspected, an RGB type CMOS image sensor 26, etc.

The body portion 100 is constituted by an arithmetic/control processing portion 101, a monitor 102, a touch panel 103, a switch button 104, a printer 105, a memory 106 etc. Control of turning ON/OFF of the measurement light source 11, the UV light source 12 and the blue light source 13 or control of the CMOS image sensor 26 is performed in accordance with a control signal from the arithmetic/control processing portion 101. In addition, image data acquired by the CMOS image sensor 26 are inputted to the arithmetic/control processing portion 101. Up reception of the image data, the arithmetic/control processing portion 101 applies arithmetic processing to the image data to thereby calculate refractive power, an ultraviolet light transmittance, a blue light transmittance, etc. of the lens-to-be-inspected. The arithmetic/control processing portion 101 stores the calculated results in the memory 106 and displays them on the monitor 102.

Next, the optical system 10 will be described with reference to Fig. 3. The optical system 10 is constituted by a light emission portion and a light reception portion. The light emission portion is provided with the measurement light source 11, the UV light source 12, the blue light source 13 etc. The light reception portion is provided with the CMOS image sensor 26 etc.

In the embodiment, for example, a green LED whose wavelength is 535 nm is used as the measurement light source 11. Refractive power of a spectacle lens is valued using a d line (587.56 nm) or an e line (546.07 nm) which serves as a reference wavelength. In the embodiment, the green light having the wavelength of 535 nm near to each of the reference wavelengths of the d line and the e line is used. However, the invention is not limited thereto. A red LED longer in wavelength than the green light may be used. An error caused by a difference between the green light or the red light and the reference wavelength can be corrected by calibration work using a reference lens.

In addition, in the embodiment, for example, an ultraviolet LED whose wavelength is 375 nm is used as the UV light source 12. The UV light source 12 is also not limited thereto. Any light source having a wavelength ranging from 370 nm to 400 nm may be used.

In addition, in the embodiment, for example, a blue LED whose wavelength is 465 nm is used as the blue light source 13. The blue light source 13 is also not limited thereto. Any light source having a wavelength ranging from 430 nm to 500 nm may be used.

A hot mirror 14 is set to transmit the ultraviolet light emitted from the UV light source 12 and reflect the blue light emitted from the blue light source 13. In addition, a hot mirror 15 is set to transmit the ultraviolet light emitted from the UV light source 12 and the blue light emitted from the blue light source 13 and reflect the green light emitted from the measurement light source 11.

That is, the ultraviolet light (hereinafter referred to as "ultraviolet light") emitted from the UV light source 12 and the blue light (hereinafter referred to as "blue light") emitted from the blue light source 13 are multiplexed with each other by the hot mirror 14. Further, the green light (hereinafter referred to as "measurement light") emitted from the measurement light source 11 is multiplexed with the multiplexed light of the ultraviolet light and the blue light by the hot mirror 15. The three lights are superimposed on the same optical axis and incident onto a diaphragm 16 and a collimator lens 17.

The diaphragm 16 is made of a thin flat plate provided with a circular through hole. The diaphragm 16 serves for limiting the diameter of luminous flux of light to be radiated onto a lens-to-be-inspected 18. When the diameter of the luminous flux of the light to be radiated onto the lens-to-be-inspected 18 is too large, there is a fear that the light may be radiated onto another constituent component (not shown) disposed between the collimator lens 17 and the lens-to-be-inspected 18 and the light reflected from the other constituent component may enter the lens-to-be-inspected 18. The diaphragm 16 limits the diameter of the luminous flux of the light to be radiated onto the lens-to-be-inspected 18 so that the light reflected from the other constituent component can be prevented from entering the lens-to-be-inspected 18.

In addition, the measurement light source 11, the UV light source 12 and the blue light source 13 are disposed in positions corresponding to a back focal length (back focus) of the collimator lens 17. Thus, the measurement light, the ultraviolet light, and the blue light are collimated by the collimator lens 17 and radiated vertically onto the lens-to-be-inspected 18.

The measurement light, the ultraviolet light and the blue light transmitted through the lens-to-be-inspected 18 are incident on a cover glass 20, a pattern plate 21, and condensing lenses 22, 23 and 24. Then, the measurement light, the ultraviolet light and the blue light are transmitted through a filter 25, and then incident on the CMOS image sensor 26.

Here, the cover glass 20 is a flat plate-like plate glass which is disposed in order to protect the light reception portion from dust etc. In the embodiment, multicoating for preventing reflection is applied to both an upper surface and a lower surface of the cover glass 20 so that the measurement light, the ultraviolet light and the blue light which have been transmitted through the lens-to-be-inspected 18 can be transmitted through the cover glass 20 at nearly 100% transmittance. Incidentally, the multicoating is not essential. However, proper coating for preventing reflection may be applied to the cover glass 20 suitably if occasions demand.

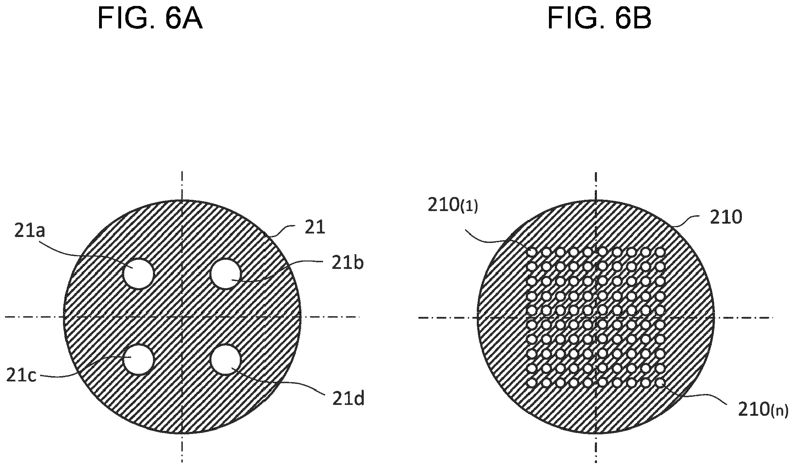

A circular plate-like flat plate provided with four circular through holes 21a, 21b, 21c and 21d, for example, with vertexes of a square as their centers, as shown in Fig. 6A can be used as the pattern plate 21. The measurement light, the ultraviolet light and the blue light which have been transmitted through the lens-to-be-inspected 18 are refracted in accordance with the refractive power of the lens-to-be-inspected 18 and incident on the pattern plate 21 so as to be separated into four lights. The four separated lights are condensed by the condensing lenses 22, 23 and 24 and transmitted through the filter 25. Then, the four separated lights form an image on each light receiving surface of the CMOS image sensor 26.

Positions where the four lights form the image on the light receiving surface of the CMOS image sensor 26 change in accordance with the refractive power of the lens-to-be-inspected 18. Accordingly, gravity center positions (coordinate positions) of the four lights are calculated from the image data of the CMOS image sensor 26. Thus, a value of the refractive power of the lens-to-be-inspected 18 can be calculated. A method for calculating values of optical characteristics such as spherical refractive power S, cylindrical refractive power C, an astigmatic angle A, etc. from the four coordinate positions has been disclosed in Japanese Patent No. 3150404 etc. Hence, details about the method will be omitted here.

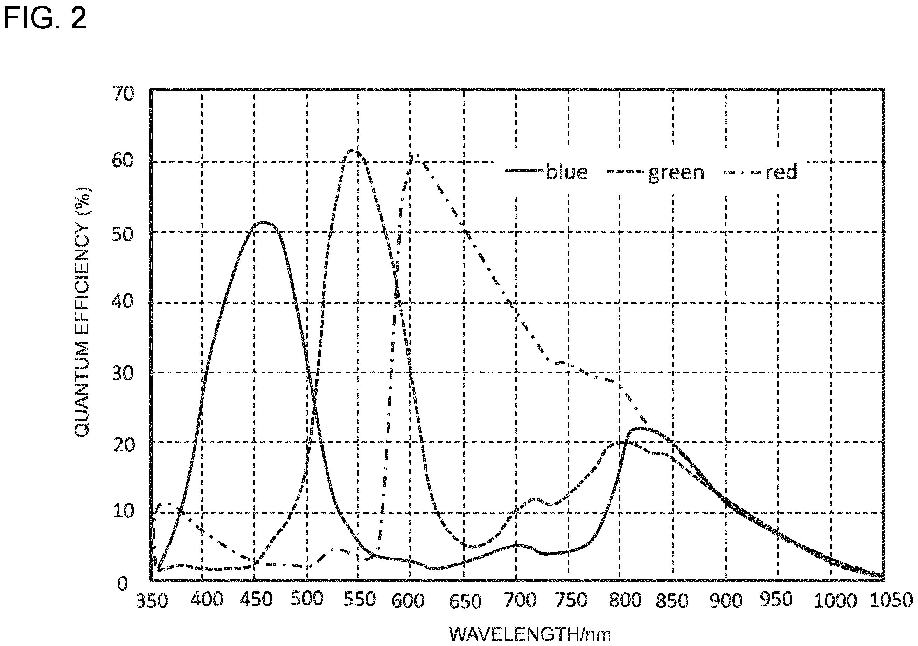

Fig. 2 is a graph showing quantum efficiencies (%) versus wavelengths in an R light receiving surface (red), a G light receiving surface (green) and a B light receiving surface (blue) of the CMOS image sensor 26 used in the embodiment. As apparent from the graph of Fig. 2, the R light receiving surface (one-dot chain line) has sensitivity in an ultraviolet light region ranging from 350 nm to 400 nm and a red and infrared light region ranging from 560 nm to 1050 nm, the G light receiving surface (broken line) has sensitivity in a green light region ranging from 500 nm to 600 nm and a red and infrared light region ranging from 650 nm to 1050 nm, and the B light receiving surface (solid line) has sensitivity in a blue light region ranging from 400 nm to 520 nm and a red and infrared light region ranging from 650 nm to 1050 nm. As described above, the wavelengths of the measurement light, the ultraviolet light and the blue light used in the embodiment are 535 nm, 375 nm and 465 nm respectively. For this reason, a wavelength region longer than 560 nm is unnecessary. Therefore, in the embodiment, the filter 25 for cutting light in a wavelength range not shorter than 560 nm is disposed immediately before the CMOS image sensor 26. Thus, light in a long wavelength range not shorter than 560 nm, which may be likely to become noise light, is cut properly so that the ultraviolet light, the measurement light and the blue light can be selectively received by the R light receiving surface (red), the G light receiving surface (green) and the B light receiving surface (blue) of the CMOS image sensor 26 respectively. Here, a hot mirror etc. which reflects light in a long wavelength range not shorter than 560 nm and transmits light in a short wavelength range shorter than 560 nm may be used as the filter 25 here.

As described above, the measurement light, the ultraviolet light and the blue light are radiated to the lens-to-be-inspected 18 and along the same optical axis. Accordingly, the refractive power of the lens-to-be-inspected 18 can be obtained also from the blue light in addition to the measurement light. A value of the refractive power obtained from the measurement light (535 nm) near to the d line (587.56 nm) or the e line (546.07 nm) which is a reference wavelength may be used directly. However, the wavelength of the measurement light is 535 nm which has a difference from the reference wavelength. Hence, a value of the refractive power obtained from the blue light is used in addition to the value of the refractive power obtained from the measurement light. From the two values, an approximate equation as to the wavelength and the value of the refractive power can be obtained. Thus, the value of the refractive power of the lens-to-be-inspected 18 at the d line (587.56 nm) or the e line (546.07 nm) which is the reference wavelength can be obtained. Thus, calibration work for correcting an error generated by the difference from the reference wavelength can be omitted. In addition, since the value of the refractive power at the reference wavelength is calculated, correction using an Abbe's number, which is correction of chromatic aberration, is not required. Hence, the refractive power of the lens-to-be-inspected 18 can be calculated with high accuracy. In addition, as long as the lens-to-be-inspected 18 transmits ultraviolet light sufficiently, the refractive power of the lens-to-be-inspected 18 may be measured also in the ultraviolet light so that a value of the refractive power at the reference wavelength can be obtained using the value.

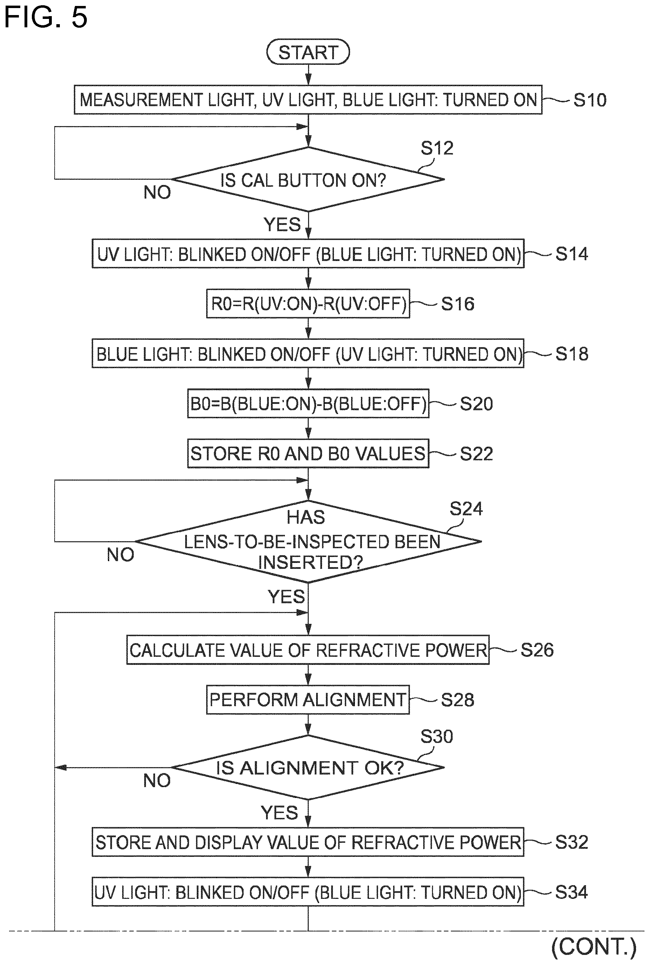

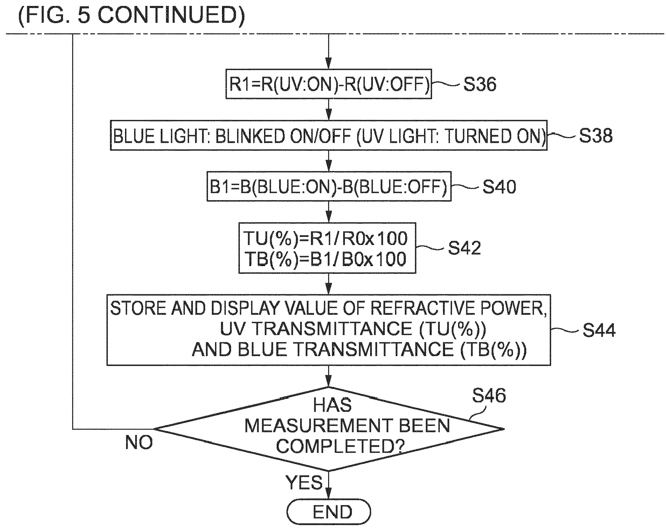

Next, measurement of the ultraviolent light transmittance and the blue light transmittance in the embodiment will be described with reference to Fig. 5. An example of an operation flow of the lensmeter according to the first embodiment of the invention will be shown in Fig. 5.

First, in a step S10, the measurement light source 11, the UV light source 12 and the blue light source 13 are turned ON. In a step S12, it is determined whether the switch button 104 (CAL button) has been pressed or not. When the switch button 104 has been pressed (Y), the operation flow goes to a step S14.

In the step S14, the UV light source 12 is blinked ON/OFF. In a step S16, a light quantity R(UV:ON) and a light quantity R(UV:OFF) in the R light receiving surface (red) of the CMOS image sensor 26 are measured in an ON time and an OFF time of the UV light source 12, and a difference (R(UV:ON)-R(UV:OFF)) in light quantity between the ON time and the OFF time of the UV light source 12 is calculated. When the UV light source 12 is blinked ON/OFF several times, an average value R0 of the differences (R(UV:ON)-R(UV:OFF)) is obtained.

In a step S18, the blue light source 13 is blinked ON/OFF. In a step S20, a light quantity B(blue:ON) and a light quantity B(blue:OFF) in the B light receiving surface (blue) of the CMOS image sensor 26 are measured in an ON time and an OFF time of the blue light source 13, and a difference (B(blue:ON)-B(blue:OFF)) in light quantity between the ON time and the OFF time of the blue light source 13 is calculated. When the blue light source 13 is blinked ON/OFF several times, an average value B0 of the differences (B(blue:ON)-B(blue:OFF)) is obtained.

In a step S22, the average value R0 obtained in the step S16 and the average value B0 obtained in the step S20 are stored in the memory 106.

In a step S24, it is determined whether the lens-to-be-inspected 18 has been inserted or not. When the lens-to-be-inspected 18 has been inserted (Y), calculation of the refractive power of the lens-to-be-inspected 18 is started in a step S26. The refractive power of the lens-to-be-inspected 18 can be calculated at any time after the lens-to-be-inspected 18 has been inserted. Whenever the refractive power of the lens-to-be-inspected 18 is calculated, the calculated result is stored in the memory 106 and displayed on the monitor 102.

The operation flow goes to a step S28, in which alignment is performed. The alignment is performed to move the lens-to-be-inspected left and right or back and forth so that an optical center of the lens-to-be-inspected 18 can come to a measurement optical axis. Specifically, the alignment is performed to move the lens-to-be-inspected so that a target displayed on the monitor 102 can come to a coordinate center.

In a step S30, it is determined whether the alignment has been completed or not. When the alignment has been completed (Y: alignment OK), a value of the refractive power of the lens-to-be-inspected 18 obtained when the alignment has been completed is stored in the memory 106 and displayed on the monitor 102 in a step S32. When the alignment has not been completed yet (N: alignment NG), the operation flow returns to the step S26, in which the refractive power of the lens-to-be-inspected 18 is calculated again.

In a state in which the lens-to-be-inspected 18 has been aligned, the UV light source 12 is blinked ON/OFF in a step S34. In a step S36, a light quantity R(UV:ON) and a light quantity R(UV:OFF) in the R light receiving surface (red) of the CMOS image sensor 26 are measured in an ON time and an OFF time of the UV light source 12, and a difference (R(UV:ON)-R(UV:OFF)) in light quantity between the ON time and the OFF time of the UV light source 12 is calculated. When the UV light source 12 is blinked ON/OFF several times, an average value R1 of the differences (R(UV:ON)-R(UV:OFF)) is obtained.

Next, in a step S38, the blue light source 13 is blinked ON/OFF. In a step S40, a light quantity B(blue:ON) and a light quantity B(blue:OFF) in the B light receiving surface (blue) of the CMOS image sensor 26 are measured in an ON time and an OFF time of the blue light source 13, and a difference (B(blue:ON)-B(blue:OFF)) in light quantity between the ON time and the OFF time of the blue light source 13 is calculated. When the blue light source 13 is blinked ON/OFF several times, an average value B1 of the differences (B(blue:ON)-B(blue:OFF)) is obtained.

In a step S42, an ultraviolet light transmittance TU (%) and a blue light transmittance TB (%) of the lens-to-be-inspected 18 are calculated using the following expressions.

$$TU(\%)=R1/R0\times100$$

$$TB(\%)=B1/B0\times100$$

In a step S44, the ultraviolet light transmittance TU (%) and the blue light transmittance TB (%) of the lens-to-be-inspected 18 obtained in the step S42 are stored in the memory 106 and displayed on the monitor 102.

In a step S46, it is determined whether the measurement has been completed or not. When the measurement has been completed (Y), the operation is completed. When the measurement is performed again (N), the operation flow returns to the step S26, in which the ultraviolet light transmittance TU (%) and the blue light transmittance TB (%) of the lens-to-be-inspected 18 are measured again.

In the embodiment as described above, configuration is made in such a manner that the measurement light, the ultraviolet light and the blue light are radiated onto the lens-to-be-inspected 18 and along the same optical axis. Moreover, the ultraviolet light transmittance TU (%) and the blue light transmittance TB (%) of the lens-to-be-inspected 18 can be obtained in a state in which the optical center of the lens-to-be-inspected 18 has been aligned with the optical axis. Light radiated on the optical center of the lens-to-be-inspected 18 is not affected by prismatic refractive power provided by the lens-to-be-inspected 18 (the prismatic refractive power at the optical center is zero). For this reason, the measurement light, the ultraviolet light and the blue light which have been transmitted through the lens-to-be-inspected 18 are not refracted largely but can be received suitably by the light receiving surfaces of the CMOS image sensor 26. In addition, due to the alignment, transmittances can be measured at the same position of the lens-to-be-inspected 18. Accordingly, the ultraviolet light transmittance TU(%) and the blue light transmittance TB(%) can be measured accurately and with high reproducibility. Based on the obtained values of the ultraviolet light transmittance TU(%) and the blue light transmittance TB(%) of the lens-to-be-inspected 18, it is possible to determine whether the lens-to-be-inspected 18 is a blue cut lens or not, or whether the lens-to-be-inspected 18 is a UV cut lens or not.

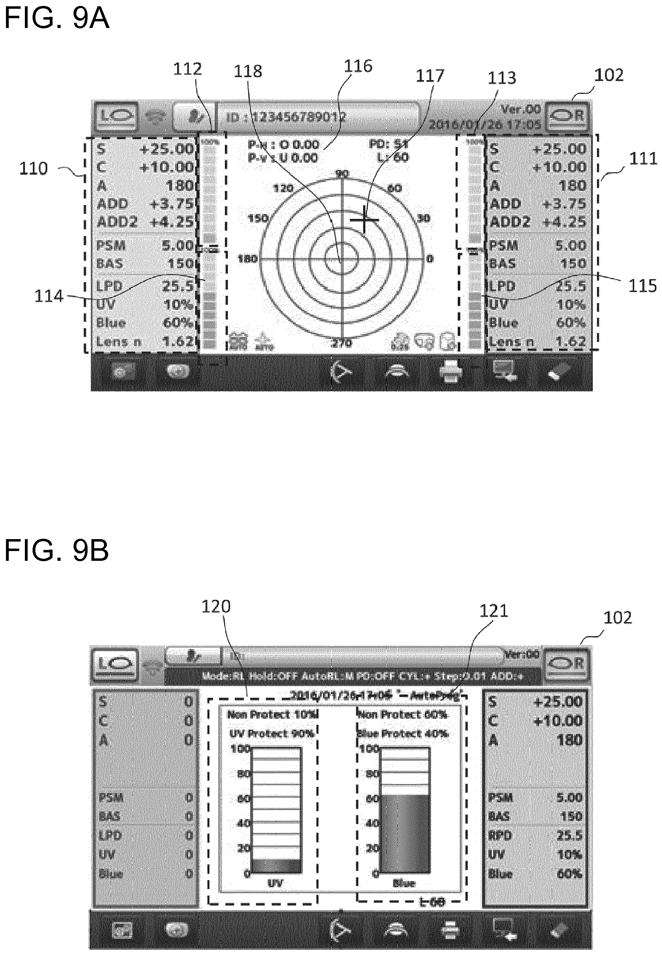

Fig. 9A is an example of a measurement screen displayed on the monitor 102 of the lensmeter 1. A target area 116 is displayed in a central portion of the screen, and a target mark (+) 117 is displayed in the target area 116. The target mark (+) 117 expresses a position of an optical center of a lens-to-be-inspected 18. A center 118 of the target area 116 expresses a center of an optical axis of the optical system 10. An operator performs alignment to move the lens-to-be-inspected 18 left and right or back and forth so that the target mark (+) 117 displayed on the monitor 102 can come to the center 118 of the target area 116.

When the lens-to-be-inspected 18 is a spectacle lens for a left eye, the calculated value of the refractive power of the lens-to-be-inspected 18 is displayed in a measurement value display area 110 on a left side of the target area 116. When the lens-to-be-inspected 18 is a spectacle lens for a right eye, the calculated value of the refractive power of the lens-to-be-inspected 18 is displayed in a measurement value display area 111 on a right side of the target area 116. A blue light transmittance TB(%) (an area 112 or an area 113) and an ultraviolet light transmittance TU(%) (an area 114 or an area 115) of the lens-to-be-inspected 18 are displayed as bar graphs at places interposed between the target area 116 and the measurement value display area 110 or the measurement value display area 111. Thus, in the lensmeter 1 according to the embodiment, measurement of the refractive power of the lens-to-be-inspected 18 and measurement of the ultraviolet light transmittance TU(%) and the blue light transmittance TB(%) of the lens-to-be-inspected 18 can be performed simultaneously. Therefore, it is unnecessary to replace the lens-to-be-inspected 18 in order to measure the ultraviolet light transmittance TU(%) or the blue light transmittance TB(%). Accordingly, mismeasurement caused by misplacement of the lens-to-be-inspected can be also prevented.

Fig. 9B is a display example in which the bar graphs of the ultraviolet light transmittance TU(%) (an area 120) and the blue light transmittance TB(%) (an area 121) shown in areas of the target area 116 are largely displayed. When the ultraviolet light transmittance TU(%) and the blue light transmittance TB(%) are displayed largely in this manner, values of the ultraviolet light transmittance TU(%) and the blue light transmittance TB(%) can be checked in detail. In addition, in addition to the bar graphs, the values of the transmittances may be displayed as numerical values.

The screen displays shown in Figs. 9A and 9B are merely exemplary. The invention is not limited thereto. A screen display may be arranged suitably so that necessary values can be displayed on the monitor 102 effectively.

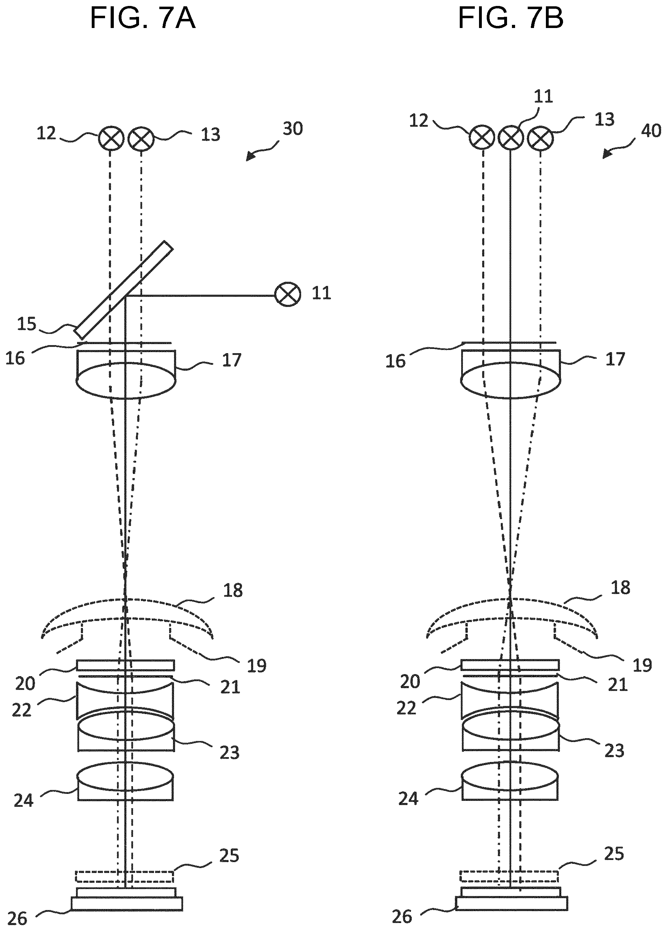

Fig. 7A shows an optical system 30 according to a second embodiment of the invention. In the first embodiment, the measurement light, the ultraviolet light and the blue light are superimposed on one optical axis (measurement optical axis) by the two hot mirrors 14 and 15 and radiated on the lens-to-be-inspected 18. However, in the second embodiment, only a hot mirror 15 is used. The hot mirror 15 transmits ultraviolet light emitted from a UV light source 12 and blue light emitted from a blue light source 13, and reflects measurement light emitted from a measurement light source 11. In the second embodiment, a position of an optical axis (measurement optical axis) of the measurement light differs from positions of optical axes of the ultraviolet light and the blue light, as shown in Fig. 7A. The optical axes of the ultraviolet light and the blue light are in positions deviated from the measurement optical axis. Therefore, the ultraviolet light and the blue light are refracted by a collimator lens 17 and radiated onto a lens-to-be-inspected 18 in oblique directions. In the second embodiment, the lens-to-be-inspected 18 is set to be disposed at a position corresponding to a front focal length of the collimator lens 17. Thus, the ultraviolet light and the blue light are obliquely radiated onto an optical center of the lens-to-be-inspected 18. Thus, refractive power of the lens-to-be-inspected 18 cannot be measured using the ultraviolet light and the blue light as in the first embodiment. However, the influence of prismatic refractive power of the lens-to-be-inspected 18 can be avoided. Accordingly, an ultraviolet light transmittance TU(%) and a blue light transmittance TB(%) can be measured efficiently. In addition, when the number of hot mirrors is reduced to one, the configuration of a light emission portion can be simplified. Accordingly, adjustment of the optical axis can be simplified and the cost can be reduced.

Fig. 7B shows an optical system 40 according to a third embodiment of the invention. In the second embodiment, the measurement light, the ultraviolet light and the blue light are multiplexed with one another by one hot mirror 15. However, the hot mirror is dispensed with in the third embodiment. In the third embodiment, a measurement light source 11 is disposed on a measurement optical axis, and a UV light source 12 and a blue light source 13 are disposed with interposition of the measurement light source 11 therebetween, as shown in Fig. 7B. Therefore, in the same manner as in the second embodiment, ultraviolet light and blue light are refracted by a collimator lens 17 to be radiated onto a lens-to-be-inspected 18 in oblique directions. In the same manner as in the second embodiment, the lens-to-be-inspected 18 is set to be disposed at a position corresponding to a front focal length of the collimator lens 17. Thus, the ultraviolet light and the blue light are obliquely radiated onto an optical center of the lens-to-be-inspected 18. Thus, in the same manner as in the second embodiment, refractive power of the lens-to-be-inspected 18 cannot be measured using the ultraviolet light and the blue light as in the first embodiment. However, the influence of prismatic refractive power of the lens-to-be-inspected 18 can be avoided. Accordingly, an ultraviolet light transmittance TU(%) and a blue light transmittance TB(%) can be measured efficiently. In addition, the hot mirror is dispensed with in the third embodiment. Accordingly, the configuration of a light emission portion can be simplified more greatly. Accordingly, adjustment of the optical axis can be simplified more greatly and the cost can be reduced more greatly.

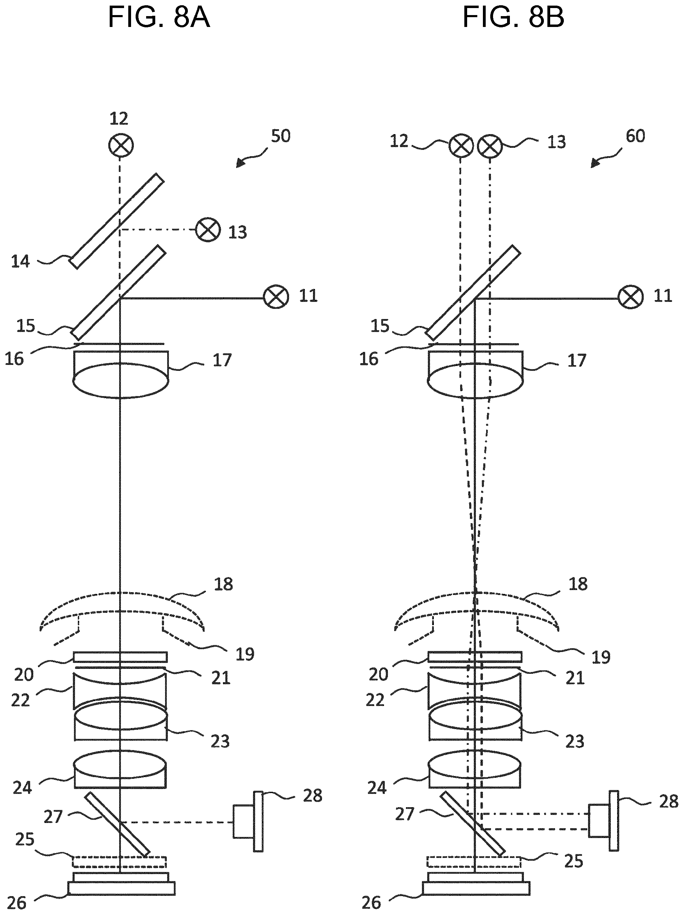

Fig. 8A shows an optical system according to a fourth embodiment of the invention. In the fourth embodiment, a light emission portion is the same as that in the aforementioned first embodiment, but a cold mirror 27 is disposed between a condensing lens 24 and a filter 25 of a light reception portion. The cold mirror 27 is set to reflect ultraviolet light and blue light and transmit measurement light (which is longer in wavelength than the ultraviolet light and the blue light). Thus, the measurement light is transmitted through the filter 25 and incident on a CMOS image sensor 26. On the other hand, the ultraviolet light and the blue light are reflected on the cold mirror 27 to be incident on a photodetector 28 which is disposed at a place different from the CMOS image sensor 26. A (not-shown) filter is disposed in front of a light receiving surface of the photodetector 28 so that the photodetector 28 can selectively receive light shorter in wavelength than a blue light region. When such a configuration is used, refractive power of a lens-to-be-inspected 18 can be measured based on the measurement light by the CMOS image sensor 26, and an ultraviolet light transmittance TU(%) and a blue light transmittance TB(%) of the ultraviolet light and the blue light can be measured by the photodetector 28 respectively. That is, when the ultraviolet light transmittance is measured, a UV light source 12 is turned ON and a blue light source 13 is turned OFF. When the blue light transmittance is measured, the UV light source 12 is turned OFF and the blue light source 13 is turned ON. Thus, the ultraviolet light transmittance TU(%) and the blue light transmittance TB(%) of the lens-to-be-inspected 18 can be measured in a simplified manner. When a photodetector having high sensitivity in an ultraviolet light region and a blue light region is used as the photodetector 28, the ultraviolet light transmittance TU(%) and the blue light transmittance TB(%) of the lens-to-be-inspected 18 can be measured with high accuracy. In addition, an RGB type CMOS image sensor 26 does not have to be used but a monochrome CCD image sensor or CMOS sensor high in contrast can be used as a light reception element. Thus, the refractive power of the lens-to-be-inspected 18 can be measured with high accuracy.

Fig. 8B shows an optical system 60 according to a fifth embodiment of the invention. According to the fifth embodiment, a light emission portion in the fourth embodiment is replaced with the light emission portion in the second embodiment. Thus, the cost can be reduced.

Here, the lensmeter 1 is an example of the lensmeter. The measurement light source 11 is an example of the measurement light source. The UV light source 12 is an example of the first inspection light source. The blue light source 13 is an example of the second inspection light source. The CMOS image sensor 26 is an example of the first light reception element. The hot mirror 15 is an example of the first multiplexing unit or the third multiplexing unit. The hot mirror 14 is an example of the third multiplexing unit. The cold mirror 27 is an example of the extraction unit. The photodetector 28 is an example of the second light reception element.

Incidentally, the technical scope of the invention is not limited to the aforementioned embodiments but various changes may be added to the invention without departing from the gist of the invention. For example, the invention is not limited to the aforementioned embodiments to which the invention is applied, but may be applied to any embodiment in which the aforementioned embodiments are used in combination suitably. The invention is not limited particularly.

For example, the light emission portion in the third embodiment may be used as the light emission portion in the fourth embodiment. Thus, since the hot mirror can be dispensed with, component cost can be reduced, and manufacturing cost can be reduced due to simplification of adjustment of the optical axis. That is, it is possible to provide an inexpensive lensmeter by which measurement of refractive power of a lens-to-be-inspected 18 and measurement of an ultraviolet light transmittance and a blue light transmittance of the lens-to-be-inspected 18 can be performed.

In addition, although the green LED whose wavelength is 535 nm is used as the measurement light source 11 in the aforementioned embodiments, the measurement light source is not limited thereto. For example, a red LED whose wavelength is in a range of from 600 nm to 700 nm may be used. The light reception element often has high sensitivity in the red light range or a longer wavelength light region than the red light. The red LED has a higher light output than the green LED. Accordingly, the refractive power of the lens-to-be-inspected 18 can be measured with higher accuracy when the red LED is used as the measurement light source 11. The wavelength of the measurement light source 11 is not limited to the green light or the red light. It is a matter of course that various wavelengths of yellow light, infrared light etc. may be used as the wavelength of the measurement light source 11.

In addition, in the aforementioned embodiments, the pattern plate having four holes as shown in Fig. 6A is used as the pattern plate 21. The pattern plate is not limited thereto. For example, a Hartmann plate provided with a large number of through holes as in a pattern plate 210 in Fig. 6B may be used. Further, although not shown in the description of the invention, a circular pattern may be used. That is, various patterns disclosed in the Patent Literature can be used.

In addition, in the aforementioned fourth embodiment and the aforementioned fifth embodiment, the cold mirror 27 which reflects the ultraviolet light and the blue light and transmits the measurement light (longer in wavelength than the ultraviolet light and the blue light) is used in the light reception portion. However, the extraction unit is not limited thereto. For example, a cold mirror which reflects ultraviolet light and transmits blue light and measurement light which are longer in wavelength than the ultraviolet light, and a photodetector which receives the reflected ultraviolet light may be further disposed between the condensing lens 24 and the cold mirror 27. When such a configuration is used, measurement of the refractive power of the lens-to-be-inspected and measurement of the ultraviolet light transmittance and the blue light transmittance of the lens-to-be-inspected can be carried out at any time.

In the lensmeter according to the invention, the lights from the measurement light source, the first inspection light source (including the ultraviolet light) and the second inspection light source (including the blue light) which belong to the light emission portion can be radiated onto the lens-to-be-inspected, the lights which are emitted from the measurement light source, the first inspection light source and the second inspection light source respectively and transmitted through the lens-to-be-inspected can be selectively received by the first light reception element. Thus, the refractive power of the lens-to-be-inspected can be measured based on the light from the measurement light source, and transmittances of the ultraviolet light and the blue light of the lens-to-be-inspected can be measured. Accordingly, it is possible to determine whether the lens-to-be-inspected is an ultraviolet cut lens or a blue cut lens.

In addition, measurement of the refractive power of the lens-to-be-inspected and measurement of the transmittances of the ultraviolet light and the blue light of the lens-to-be-inspected can be performed in the same optical system. Accordingly, it is unnecessary to replace the lens-to-be-inspected in order to measure the transmittance of the ultraviolet light or the blue light. Thus, it is possible to prevent mismeasurement due to misplacement of the lens-to-be-inspected, which is apt to occur when the lens-to-be-inspected is replaced so that the transmittance of the ultraviolet light or the blue light can be measured by another device. Thus, measurement of the refractive power of the lens-to-be-inspected and the measurement of the transmittances of the ultraviolet light and the blue light of the lens-to-be-inspected can be performed accurately.

In the lensmeter according to the invention, the RGB type CCD image sensor or CMOS image sensor is used as the first light reception element of the light reception portion. In the RGB type CCD image sensor or CMOS image sensor, each pixel is provided with an R light receiving surface for receiving red light, a G light receiving surface for receiving green light, and a B right receiving surface for receiving blue light. In the RGB type CCD image sensor or CMOS image sensor, the R light receiving surface for receiving red light may also have sensitivity in an ultraviolet light region (up to 400 nm) in addition to a red light region, as designated by a one-dot chain line (red) of a graph in Fig. 2. When such an RGB type CCD image sensor or CMOS image sensor is used as the first light reception element, the light (green light or red light) emitted from the measurement light source and used for measurement of the refractive power, the light (ultraviolet light) emitted from the first inspection light source and used for measurement of the transmittance of the ultraviolet light, and the light (blue light) emitted from the second inspection light source and used for measurement of the transmittance of the blue light can be received selectively. Thus, the configuration of the optical system can be simplified so that the cost can be reduced. In addition, since the optical system is simplified, the optical axis can be also adjusted easily. Accordingly, it is also possible to prevent mismeasurement from occurring due to a fault in the adjustment of the optical axis.

In the lensmeter according to the invention, the light emission portion is configured so that the light (hereinafter referred to as "first inspection light") from the first inspection light source, and the light (hereinafter referred to as "second inspection light") from the second inspection light source can be radiated onto the lens-to-be-inspected and along the optical axis parallel to the measurement luminous flux including the light (hereinafter referred to as "measurement light") from the measurement light source in order to measure the refractive power of the lens-to-be-inspected. When light is radiated onto a position out of an optical center of the lens-to-be-inspected, the radiated light is refracted largely by prismatic refractive power provided by the lens-to-be-inspected, so that the light cannot be received sufficiently by the light receiving surface of the first light reception element. In a worst case, the light may be too wide of the light receiving surface to be received by the light receiving surface. In the lensmeter, normally, an operator aligns the lens-to-be-inspected so that the light emitted from the measurement light source and used for measurement of the refractive power can be vertically radiated onto the lens-to-be-inspected, and the luminous flux of the light from the measurement light source can come to the optical center of the lens-to-be-inspected. The first inspection light and the second inspection light are radiated on the lens-to-be-inspected and along the optical axis parallel with the measurement luminous flux including the measurement light used for measurement of the refractive power of the lens-to-be-inspected. Accordingly, the first inspection light (ultraviolet light) or the second inspection light (blue light) is also vertically radiated onto the lens-to-be-inspected and at or near the optical center of the lens-to-be-inspected. Thus, after the first inspection light or the second inspection light is radiated onto the lens-to-be-inspected, the influence of the prismatic refractive power can be suppressed so that the first inspection light or the second inspection light is not refracted largely but can be received by the light receiving surface of the first light reception element. That is, the first inspection light and the second inspection light are radiated onto the lens-to-be-inspected and along the optical axis parallel with the measurement luminous flux of the measurement light in order to measure the refractive power of the lens-to-be-inspected. With such a configuration, measurement of the transmittance of the ultraviolet light and measurement of the transmittance of the blue light can be performed accurately and with high reproducibility.

In the lensmeter according to the invention, a hot mirror etc. which transmits the first inspection light (ultraviolet light) and the second inspection light (blue light) and reflects the green light or the red light serving as the measurement light (which is longer in wavelength than the ultraviolet light and the blue light) is used as the first multiplexing unit. In this manner, the first inspection light and the second inspection light can be multiplexed with the measurement light. Thus, the first inspection light and the second inspection light can be radiated onto the lens-to-be-inspected and along the optical axis parallel with the luminous flux of the measurement light in a simplified manner.

In the lensmeter according to the invention, a hot mirror which transmits the first inspection light (ultraviolet light) and reflects the second inspection light (blue light) (which is longer in wavelength than the ultraviolet light) is used as the second multiplexing unit, and a hot mirror which transmits the first inspection light and the second inspection light and reflects the measurement light (which is longer in wavelength than the ultraviolet light and the blue light) is used as the third multiplexing unit. The hot mirror of the second multiplexing unit is placed in front of the hot mirror of the third multiplexing unit. Accordingly, the first inspection light and the second inspection light can be radiated onto the lens-to-be-inspected and along the same optical axis as that of the luminous flux of the measurement light in a simplified manner. Thus, the transmittances of the ultraviolet light and the blue light can be measured at the optical center of the lens-to-be-inspected. Therefore, the measurement can be performed accurately and with high reproducibility so that it is possible to easily determine whether the lens-to-be-inspected is an ultraviolet cut lens or a blue cut lens.

In the lensmeter according to the invention, a cold mirror etc. which transmits the measurement light and reflects the first inspection light and the second inspection light (which are shorter in wavelength than the measurement light) is used as the extraction unit. Thus, the light transmitted through the lens-to-be-inspected, can be separated into the first inspection light with the second inspection light, and the measurement light in a simplified manner. In other words, from the light transmitted through the lens-to-be-inspected, the first inspection light with the second inspection light can be extracted with respect to the measurement light in a simplified manner. After the extraction, the first inspection light with the second inspection light, and the measurement light can be measured by different light reception elements respectively. Accordingly, the RGB type CCD image sensor or CMOS image sensor does not have to be used but an inexpensive photodetector may be used as the first light reception element. In addition, a photodetector having high sensitivity in wavelength ranges of the ultraviolet light and the blue light is used as the second light reception element used for measuring transmittances of the ultraviolet light and the blue light. Thus, the transmittances can be measured with higher accuracy. In addition, when a monochrome CCD image sensor or CMOS image sensor is used as the first light reception element, a high contrast image can be obtained. Thus, the refractive power of the lens-to-be-inspected can be measured with higher accuracy.

**Claims**

1. A lensmeter comprising:

    a light emission portion configured to emit light so as to radiate the light onto a lens-to-be-inspected; and
    a light reception portion configured to receive the light transmitted through the lens-to-be-inspected to measure an optical characteristic of the lens-to-be-inspected,
    wherein the light emission portion includes:

    a measurement light source configured to emit green light or red light for measurement of refractive power of the lens-to-be-inspected;
    a first inspection light source configured to emit ultraviolet light; and
    a second inspection light source configured to emit blue light, and

    wherein the light reception portion is configured to selectively receive lights from the measurement light source, the first inspection light source and the second inspection light source respectively.

2. The lensmeter according to Claim 1, wherein the light reception portion is an RGB type CCD image sensor or CMOS image sensor, and a light receiving surface of the light reception portion for receiving red light has sensitivity in an ultraviolet light region.

3. The lensmeter according to Claim 1 or 2, wherein the light emission portion is configured to radiate the light from the first inspection light source and the light from the second inspection light source onto the lens-to-be-inspected along an optical axis parallel with measurement luminous flux of the light from the measurement light source, so that the refractive power of the lens-to-be-inspected is measured.

4. The lensmeter according to any one of Claims 1 to 3, wherein the light emission portion includes a first multiplexing unit which multiplexes at least one of the light from the first inspection light source and the light from the second inspection light source with the light from the measurement light source.

5. The lensmeter according to any one of Claims 1 to 3, wherein the light emission portion includes a second multiplexing unit which multiplexes the light from the first inspection light source with the light from the second inspection light source, and a third multiplexing unit which multiplexes the multiplexed light multiplexed by the second multiplexing unit with the light from the measurement light source.

6. The lensmeter according to any one of Claims 1 to 5, wherein the light reception portion includes an extraction unit configured to extract, from the light transmitted through the lens-to-be-inspected, the lights from the first inspection light source and the second inspection light source, with respect to the light from the measurement light source, the light reception portion includes a first light reception element configured to receive the light from the measurement light source and a second light reception element configured to receive the light from the first inspection light source and the light from the second inspection light source, and the second light reception element is disposed in a different position from the first light reception element.

# FIG. 1

## FIG. 2

EP 3 309 540 A1

# FIG. 3

# FIG. 4

OPTICAL SYSTEM (10)

BODY PORTION (100)

1

101

| | |
|---|---|
| 11 MEASUREMENT OPTICAL SOURCE | |
| 12 UV LIGHT SOURCE | |
| 13 BLUE LIGHT SOURCE | |
| 26 CMOS | |

ARITHMETIC/CONTROL PROCESSING PORTION

MONITOR 102

TOUCH PANEL 103

SWITCH BUTTON 104

PRINTER 105

MEMORY 106

EP 3 309 540 A1

# FIG. 5

```
                    ( START )
                        │
                        ▼
MEASUREMENT LIGHT, UV LIGHT, BLUE LIGHT: TURNED ON ─── S10
                        │
        ┌───────────────┤
        │               ▼              S12
        │          ◇ IS CAL BUTTON ON? ◇
        │    NO                         
        │               │ YES
        │               ▼
        │  UV LIGHT: BLINKED ON/OFF (BLUE LIGHT: TURNED ON) ─── S14
        │               │
        │               ▼
        │      R0=R(UV:ON)-R(UV:OFF) ─── S16
        │               │
        │               ▼
        │  BLUE LIGHT: BLINKED ON/OFF (UV LIGHT: TURNED ON) ─── S18
        │               │
        │               ▼
        │     B0=B(BLUE:ON)-B(BLUE:OFF) ─── S20
        │               │
        │               ▼
        │      STORE R0 AND B0 VALUES ─── S22
        │               │
        ┌───────────────┤
        │               ▼            S24
        │          ◇ HAS LENS-TO-BE-INSPECTED BEEN INSERTED? ◇
        │    NO
        │               │ YES
        │               ▼
        │  CALCULATE VALUE OF REFRACTIVE POWER ─── S26
        │               │
        │               ▼
        │      PERFORM ALIGNMENT ─── S28
        │               │
        │               ▼          S30
    ◄───┤          ◇ IS ALIGNMENT OK? ◇
        │    NO
        │               │ YES
        │               ▼
        │  STORE AND DISPLAY VALUE OF REFRACTIVE POWER ─── S32
        │               │
        │               ▼
        │  UV LIGHT: BLINKED ON/OFF (BLUE LIGHT: TURNED ON) ─── S34
        │               │
```

(CONT.)

EP 3 309 540 A1

(FIG. 5 CONTINUED)

R1=R(UV:ON)-R(UV:OFF) — S36

BLUE LIGHT: BLINKED ON/OFF (UV LIGHT: TURNED ON) — S38

B1=B(BLUE:ON)-B(BLUE:OFF) — S40

TU(%)=R1/R0x100
TB(%)=B1/B0x100 — S42

STORE AND DISPLAY VALUE OF REFRACTIVE POWER,
UV TRANSMITTANCE (TU(%))
AND BLUE TRANSMITTANCE (TB(%)) — S44

HAS MEASUREMENT BEEN COMPLETED?   S46

NO

YES

END

16

# FIG. 6A

# FIG. 6B

# FIG. 7A

# FIG. 7B

# FIG. 8A

# FIG. 8B

## FIG. 9A

## FIG. 9B

Europäisches
Patentamt

European
Patent Office

Office européen
des brevets

# EUROPEAN SEARCH REPORT

**Application Number**

EP 17 18 6240

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 719 668 A (OANA YOSHINORI [JP] ET AL) 17 February 1998 (1998-02-17) * the whole document * | 1-6 | INV. G01N21/958 G01M11/02 |
| X,D | JP 2007 205876 A (TOMEY CORP) 16 August 2007 (2007-08-16) * the whole document * | 1 | |
| A | JP H11 211617 A (TOPCON CORP) 6 August 1999 (1999-08-06) * paragraph [0019]; figure 3 * | 1 | |
| A,P | Anonymous: "Light-emitting diode - Wikipedia", , 22 November 2016 (2016-11-22), XP055322532, Retrieved from the Internet: URL:https://en.wikipedia.org/wiki/Light-emitting_diode [retrieved on 2016-11-24] * sub-title: Blue LED and figure: RGB-SMD-LED; page 3 * | 1 | |
| A | Anonymous: "Charge-coupled device - Wikipedia, the free encyclopedia", , 12 July 2012 (2012-07-12), XP055091211, Retrieved from the Internet: URL:http://en.wikipedia.org/w/index.php?title=Charge-coupled_device&oldid=501852635 [retrieved on 2013-12-03] * page 4, lines 41-43 * | 2 | |

**TECHNICAL FIELDS SEARCHED (IPC)**

G01N
G01M

The present search report has been drawn up for all claims

| Place of search | Date of completion of the search | Examiner |
|---|---|---|
| Berlin | 29 January 2018 | Prasse, Torsten |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 17 18 6240

This annex lists the patent family members relating to the patent documents cited in the above-mentioned European search report.
The members are as contained in the European Patent Office EDP file on
The European Patent Office is in no way liable for these particulars which are merely given for the purpose of information.

29-01-2018

| Patent document cited in search report | | Publication date | Patent family member(s) | | Publication date |
|---|---|---|---|---|---|
| US 5719668 | A | 17-02-1998 | JP<br>US | H06249749 A<br>5719668 A | 09-09-1994<br>17-02-1998 |
| JP 2007205876 | A | 16-08-2007 | JP<br>JP | 3848357 B1<br>2007205876 A | 22-11-2006<br>16-08-2007 |
| JP H11211617 | A | 06-08-1999 | EP<br>JP<br>US<br>WO | 0971222 A1<br>H11211617 A<br>2001001572 A1<br>9937985 A1 | 12-01-2000<br>06-08-1999<br>24-05-2001<br>29-07-1999 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007205876 A
- JP 3150404 B